# EUROPEAN PATENT SPECIFICATION

(11) **EP 2 691 677 B1**
(45) Date of publication and mention of the grant of the patent: **06.05.2015**
(21) Application number: 12712400.6
(22) Date of filing: 26.03.2012
(51) Int. Cl.: F16L 3/10

(54) **PIPE CLIP**
ROHRKLEMME
COLLIER DE FIXATION

(30) Priority: 31.03.2011 NL 2006504
(43) Date of publication of application: 05.02.2014
(73) Proprietor: J. van Walraven Holding B.V., 3641 RK Mijdrecht (NL)
(72) Inventor: VAN WALRAVEN, Jan, NL-3641 GP Mijdrecht (NL); JUZAK, Marek, NL-3641 ZS Mijdrecht (NL)
(74) Representative: EP&C
(86) International application number: PCT/NL2012/050193
(87) International publication number: WO 2012/134278

(56) References cited:
- EP-A1- 0 961 069
- DE-U1- 8 806 714
- DE-U1-202009 004 932
- GB-A- 2 182 090

## Description

The present invention relates to a pipe clip for fastening a pipe to a wall, ceiling or another support, comprising:
- a metal annular clip body with an opening for attaching the pipe clip around the pipe, which opening is delimited by a first and a second end of the clip body, a first and second flange being monolithically formed with the clip body from the same piece of sheet metal at the first and second end and extending in a radial direction,
- a male fastening element comprising a head and a shank, the shank being associated with the first end and the head engaging the second end of the clip body for tightening the first and second end of the clip body together in a mounted state.

Pipe clips of this type are known.

An example of a pipe clip of this type is known from EP 0 961 069 A1 or GB 2 182 090 A.

The present invention has for an object to provide an improved pipe clip.

This object is achieved by a pipe clip of the type as described at the outset, wherein the pipe clip comprises, in addition to the first and second flange, a hinged member which is monolithically formed with the clip body from the same piece of sheet metal, said hinged member engaging the male fastening element in order to cooperate with its shank or head.

In one preferred embodiment the hinged member is formed as a female fastening element cooperating with the shank of the male fastening element.

In one possible embodiment the female fastening element is formed by a cut in a plate portion forming the first flange and is connected with the first flange by means of a hinge portion, such that the flange circumscribes the female fastening element.

Another possibility is that the female fastening element is formed by a plate portion cut out from the clip body and connected therewith by means of a hinge portion, which is bent such that the female fastening element extends spaced apart from the first flange and parallel therewith in a rest position.

A third flange may be monolithically formed with the first flange and is connected therewith by a bend portion, such that said third flange extends spaced apart from and parallel to the first flange. Said third flange may extend at the side of the first flange facing the second flange, wherein the third flange is provided with an elongate recess to allow the shank of the male fastening element to swivel. In another embodiment, the third flange extends at the side of the first flange facing away from the second flange, and wherein the female fastening element is formed by a cut in a plate portion forming the third flange and is connected with the third flange by means of a hinge portion, such that the flange circumscribes the female fastening element, wherein the first flange is provided with an elongate recess to allow the shank of the tightening element to swivel.

The hinge portion may be arranged on the radial inner end of the female fastening element. Thereby the male fastening element can swivel with its head radial outwards such that it can move beyond an outer edge of the second flange and the shank can be introduced in an introduction opening of a slot provided in the second flange.

Alternatively, the hinge portion is arranged on the radial outer end of the female fastening element. Thereby the male fastening element can swivel with its head radial inwards. The annular clip body has a recess through which the head fits and which joins a slot in the second flange. The head swivels inwards beyond a lower edge of the recess in the clip body after which the shank can move into the slot in the second flange.

In a possible embodiment of the invention the female fastening element is arranged on the side of the first flange facing away from the second flange, the first flange having a hole for passing through the shank of the male fastening element, wherein the female fastening element is connected to the first flange by a resilient hinge portion, wherein the first flange, the hinge portion and the female fastening element are monolithically formed, wherein the resilient hinge preferably is formed as a bent loop.

The female fastening element may be formed as a nut with a screw hole having an internal thread.

In another embodiment according to the invention the first flange is provided with a hole for passing through the shank of the male fastening element, wherein the hinged member comprises a half nut with a screw thread section, wherein the half nut is connected to the first flange by a resilient hinge portion, the half nut being arranged such that in use one side of the shank of the male fastening element is engaged by the half nut and an opposite side of the shank is engaged by a shank engaging portion of the first flange, wherein the first flange, the hinge portion and the female fastening element are monolithically formed, wherein the resilient hinge preferably is formed as a bent loop. In this embodiment the shank of the male fastening element, preferably provided with an outer screw thread can be pushed through the passage between the half nut and the shank engaging portion of the first flange, to tighten the pipe clip around a pipe.

In a possible further embodiment the half nut is integrally connected with the flange via a resilient loop. In another further embodiment the half nut is positioned at least partially in the hole in the first flange. In yet another further embodiment, the shank engaging portion of the first flange comprises a half nut with a screw thread section.

The half nut of the first flange may be formed such that it at least partially extends from the first flange towards the second flange. In this embodiment the hinged half nut and the half nut formed on the first flange are positioned preferably mutually staggered in axial direction of the shank of the male fastening element. In this embodiment the male fastening element is allowed to swivel radial outwards in order to allow the head, such that it can move beyond an outer edge of the second flange and the shank can be introduced in an introduction opening of a slot provided in the second flange, when the pipe clip is closed around the pipe.

Alternatively, the half nut of the first flange may be formed, such that it at least partially extends from the first flange away from the second flange. In this embodiment the male fastening element can be pushed straight through the passage between the two half nuts. In this embodiment the hinged half nut and the half nut formed on the flange are preferably positioned opposite each other. Preferably with this embodiment the second flange has a slot-like recess for the shank which opens up at a lateral edge of the second flange.

In another possible embodiment according to the invention, the second flange is provided with an opening for passing through the head of the male fastening element, and the hinged member is formed as an arresting plate for the head of the male fastening element, said arresting plate being connected to the second flange by means of a resilient hinge portion that is bent such that the arresting plate extends on the side of the second flange facing away from the first flange, wherein the second flange, the arresting plate and the hinge portion are monolithically formed. In this embodiment the male fastening element is connected to the first flange and upon closing of the pipe clip around a pipe the head of the male fastening element is moved through the hole in the second flange. When the head abuts the arresting plate it will cause the arresting plate to swivel upwardly until the head can pass the edge of the arresting plate. When the head has passed said edge of the arresting plate the arresting plate will return to its initial position and engage behind the head, thereby preventing the retraction of the head through the opening in the second flange.

The invention also relates to a pipe clip for fastening a pipe to a wall, ceiling or another support, comprising:
- a metal annular clip body with an opening for attaching the pipe clip around the pipe, which opening is delimited by a first and a second end of the clip body, a first and second flange being monolithically formed with the clip body from the same piece of sheet metal at the first and second end respectively and extending in a radial direction, the second flange being provided with a slot which opens up at the radial outer end edge of the second flange,
- a male fastening element comprising a head and a shank, the shank being associated with the first end and the head engaging the second end of the clip body for tightening the first and second end of the clip body together in a mounted state,
wherein the pipe clip comprises, in addition to the first and second flange, a hinged female fastening element cooperating with the shank of the male fastening element, which female fastening element is formed monolithically with the clip body by a cut in a plate portion forming the first flange and is connected with the first flange by means of a hinge portion, such that the flange circumscribes the female fastening element.

The invention also relates to a pipe clip for fastening a pipe to a wall, ceiling or another support, comprising:
- a metal annular clip body with an opening for attaching the pipe clip around the pipe, which opening is delimited by a first and a second end of the clip body, a first and second flange being monolithically formed with the clip body from the same piece of sheet metal at the first and second end respectively and extending in a radial direction, the second flange being provided with a slot which opens up at the radial outer end edge of the second flange,
- a male fastening element comprising a head and a shank, the shank being associated with the first end and the head engaging the second end of the clip body for tightening the first and second end of the clip body together in a mounted state,
wherein the pipe clip comprises, in addition to the first and second flange, a hinged female fastening element cooperating with the shank of the male fastening element, which is monolithically formed with the clip body by a plate portion cut out from the clip body and connected therewith by means of a hinge portion, which is bent such that the female fastening element extends spaced apart from the first flange and parallel therewith in a rest position.

In a preferred embodiment a third flange is monolithically formed with the first flange and is connected therewith by a bend portion, such that said third flange extends spaced apart from and parallel to the first flange, at the side of the first flange facing the second flange, such that in a closed state of the pipe clip it is situated between the first and second flange, the third flange being provided with an elongate recess to allow the shank of the male fastening element to pass through and swivel.

The invention also relates to a pipe clip for fastening a pipe to a wall, ceiling or another support, comprising:
- a metal annular clip body with an opening for attaching the pipe clip around the pipe, which opening is delimited by a first and a second end of the clip body, a first and second flange being monolithically formed with the clip body from the same piece of sheet metal at the first and second end respectively and extending in a radial direction, the second flange being provided with a slot which opens up at the radial outer end edge of the second flange,
- a male fastening element comprising a head and a shank, the shank being associated with the first end and the head engaging the second end of the clip body for tightening the first and second end of the clip body together in a mounted state,
wherein the pipe clip comprises, in addition to the first and second flange, a third flange which is monolithically formed with the first flange and is connected therewith by a bend portion, such that said third flange extends spaced apart from and parallel to the first flange at the side of the first flange facing away from the second flange, and wherein a female fastening element is formed monolithically with the third flange by a cut in a plate portion forming the third flange and is connected with the third flange by means of a hinge portion, such that the flange circumscribes the female fastening element.

The invention also relates to a pipe clip for fastening a pipe to a wall, ceiling or another support, comprising:
- a metal annular clip body with an opening for attaching the pipe clip around the pipe, which opening is delimited by a first and a second end of the clip body, a first and second flange being monolithically formed with the clip body from the same piece of sheet metal at the first and second end respectively and extending in a radial direction,
- a male fastening element, preferably a screw, comprising a head and a shank, the shank being associated with the first end and the head engaging the second end of the clip body for tightening the first and second end of the clip body together in a mounted state, Wherein the second flange is provided with a slot and the clip body is provided with a passage for the head of the male fastening element, the slot in the second flange and the passage in the clip body adjoining each other,
wherein the pipe clip comprises, in addition to the first and second flange, a hinged female fastening element, preferably a nut, cooperating with the shank of the male fastening element, which female fastening element is arranged on the side of the first flange facing away from the second flange, the first flange having a hole for passing through the shank of the male fastening element, wherein the female fastening element is connected to the first flange by a resilient hinge portion, wherein the first flange, the hinge portion and the female fastening element are monolithically formed, wherein the resilient hinge preferably is formed as a bent loop, which is located at the radial outer end of the first flange.

Preferably the hinge portion is arranged on the radial outer end of the first flange, and the second flange is provided with a slot that opens up at the radial inner end of the second flange in an introduction opening for the head of the male fastening element, which joins the slot and is formed in the arched portion of the clip half.

The invention also relates to a pipe clip for fastening a pipe to a wall, ceiling or another support, comprising:
- a metal annular clip body with an opening for attaching the pipe clip around the pipe, which opening is delimited by a first and a second end of the clip body, a first and second flange being monolithically formed with the clip body from the same piece of sheet metal at the first and second end respectively and extending in a radial direction,
- a male fastening element comprising a head and a shank, the shank being associated with the first end and the head engaging the second end of the clip body for tightening the first and second end of the clip body together in a mounted state,
wherein the first flange is provided with a hole for passing through the shank of the male fastening element, and wherein the pipe clip comprises, in addition to the first and second flange, a hinged half nut with a screw thread section, wherein the half nut is connected to the first flange by a resilient hinge portion, the half nut being arranged such that, in use, one side of the shank of the male fastening element is engaged by the half nut and an opposite side of the shank is engaged by a shank engaging portion of the first flange, wherein the first flange, the hinge portion and the female fastening element are monolithically formed, wherein the resilient hinge preferably is formed as a bent loop.

In a preferred embodiment the second flange is provided with a slot which opens up at the radial outer end edge of the second flange, and the hinged half nut and the half nut formed on the flange are positioned opposite each other. Preferably the half nut formed on the flange is a hinged half nut as well, which is hingedly attached to the clip body, wherein said half nut and corresponding hinging portion are monolithically formed with the clip body. Preferably the hinged half nut is positioned at least partially in the hole in the first flange.

In another preferred embodiment the second flange is provided with a slot which opens up at the radial outer end edge of the second flange, and the hinged half nut and the half nut formed on the flange are positioned mutually staggered in axial direction of the shank of the male fastening element.

In yet another preferred embodiment the second flange is provided with a slot which opens up at a lateral edge of the second flange, and the hinged half nut and the half nut formed on the flange are positioned opposite each other. Preferably the hinged half nut is positioned at least partially in the hole in the first flange.

The invention also relates to a pipe clip for fastening a pipe to a wall, ceiling or another support, comprising:
- a metal annular clip body with an opening for attaching the pipe clip around the pipe, which opening is delimited by a first and a second end of the clip body, a first and second flange being monolithically formed with the clip body from the same piece of sheet metal at the first and second end and extending in a radial direction,
- a male fastening element comprising a head and a shank, the shank being associated with the first end and the head engaging the second end of the clip body for tightening the first and second end of the clip body together in a mounted state,
wherein the pipe clip comprises, in addition to the first and second flange, a hinged arresting plate which is monolithically formed with the clip body from the same piece of sheet metal,
said hinged member engaging the male fastening element in order to cooperate with its shank or head,
wherein the second flange is provided with an opening for passing through the head of the male fastening element, and wherein the pipe clip comprises, in addition to the first and second flange, a hinged arresting plate for the head of the male fastening element, said arresting plate being connected to the second flange by means of a resilient hinge portion that is bent such that the arresting plate extends on the side of the second flange facing away from the first flange, wherein the second flange, the arresting plate and the hinge portion are monolithically formed from the same piece of sheet metal as the clip body.

The invention will be elucidated in the following detailed description with reference to the drawing, in which:
Fig. 1 shows a view in perspective of a first embodiment of a pipe clip according to the invention in an opens state,
Fig. 2 shows a view in perspective of the pipe clip of Fig. 1 in a state during closing of the clip,
Fig. 3 shows a view in perspective of the pipe clip of Fig. 1 in a closed state,
Fig. 4 shows a view in perspective of a pipe clip half of a second embodiment of a pipe clip according to the invention,
Fig. 5 shows a view in perspective of the pipe clip half of Fig. 4 in a state during manufacturing,
Fig. 6 shows a view in perspective of pipe clip of a third embodiment of a pipe clip according to the invention in an opens state,
Fig. 7 shows a view in perspective of the pipe clip of Fig. 6 in a state during closing of the clip,
Fig. 8 shows a view in perspective of the pipe clip of Fig. 6 in a closed state,
Fig. 9 shows a view in perspective of a pipe clip half of the pipe clip of Fig. 6,
Fig. 10 shows a view in perspective of pipe clip of a fourth embodiment of a pipe clip according to the invention in an opens state,
Fig. 11 shows a view in perspective of the pipe clip of Fig. 10 in a state during closing of the clip,
Fig. 12 shows a view in perspective of the pipe clip of Fig. 10 in a closed state,
Fig. 13 shows a view in perspective of a pipe clip half of the pipe clip of Fig. 10 in a state during manufacturing,
Fig. 14 shows a view in perspective of pipe clip of a fifth embodiment of a pipe clip according to the invention in an opens state,
Fig. 15 shows a view in perspective of the pipe clip of Fig. 14 in a state during closing of the clip,
Fig. 16 shows a view in perspective of the pipe clip of Fig. 14 in a closed state,
Fig. 17 shows a view in perspective of a pipe clip half of the pipe clip of Fig. 14 in a state during manufacturing,
Fig. 18 shows a view in perspective of pipe clip of a sixth embodiment of a pipe clip according to the invention in an opens state,
Fig. 19 shows a view in perspective of the pipe clip of Fig. 18 in a state during closing of the clip,
Fig. 20 shows a view in perspective of the pipe clip of Fig. 18 in a closed state before tightening of the screw,
Fig. 21 shows a view in perspective of the pipe clip of Fig. 18 in a closed state during tightening of the screw,
Fig. 22 shows a view in perspective of the pipe clip of Fig. 18 in a closed and tightened state,
Fig. 23 shows a view in perspective of a pipe clip half of the pipe clip of Fig. 18 in a state during manufacturing,
Fig. 24 shows in detail in a view in perspective a first flange of the lower clip halve from Fig. 18,
Fig. 25 shows in detail in a view in perspective the first flange of Fig. 24 in a state during manufacturing,
Fig. 26 shows a view in perspective of pipe clip of a seventh embodiment of a pipe clip according to the invention in an opens state,
Fig. 27 shows a view in perspective of the pipe clip of Fig. 26 in a state during closing of the clip,
Fig. 28 shows a view in perspective of the pipe clip of Fig. 26 in a closed state during tightening of the screw,
Fig. 29 shows a view in perspective of the pipe clip of Fig. 26 in a closed and tightened state,
Fig. 30 shows a view in perspective of a pipe clip half of the pipe clip of Fig. 26 in a state during manufacturing,
Fig. 31 shows in detail in a view in perspective a first flange of the lower clip halve from Fig. 26,
Fig. 32 shows in detail in a view in perspective the first flange of Fig. 31 in a state during manufacturing,
Fig. 33 shows a view in perspective of pipe clip of an eighth embodiment of a pipe clip according to the invention in a closed state before tightening of the screw,
Fig. 34 shows a view in perspective of the pipe clip of Fig. 33 in a closed state during tightening of the screw,
Fig. 35 shows a view in perspective of the pipe clip of Fig. 33 in a closed and tightened state,
Fig. 36 shows a view in perspective of a pipe clip half of the pipe clip of Fig. 33 in a state during manufacturing,
Fig. 37 shows in detail in a view in perspective a first flange of the lower clip halve from Fig. 33,
Fig. 38 shows a detail of Fig. 36,
Fig. 39 shows a view in perspective of pipe clip of a ninth embodiment of a pipe clip according to the invention in an opens state,
Fig. 40 shows a view in perspective of the pipe clip of Fig. 39 in a state during closing of the clip,
Fig. 41 shows a view in perspective of the pipe clip of Fig. 39 in a closed state before tightening of the screw, and
Fig. 42 shows a view in perspective of a pipe clip half of the pipe clip of Fig. 39 in a state during manufacturing.

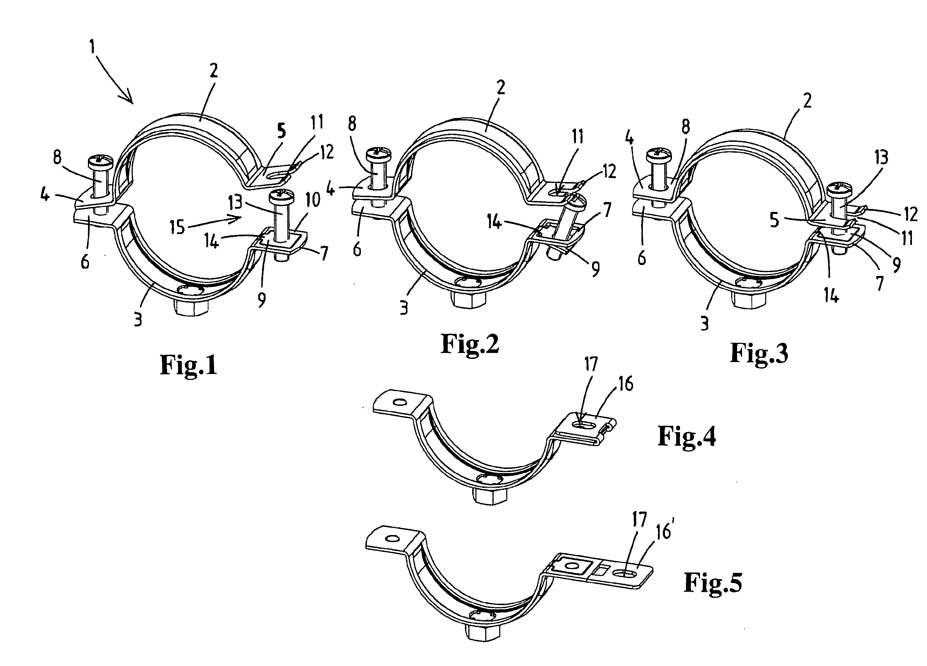

In Fig. 1 is shown a pipe clip 1 having an annular pipe clip body. The pipe clip body comprises two pipe clip halves 2 and 3 respectively, which are formed out of metal. The first clip half 2 is provided at both ends with an integral radial outwardly extending flange 4 and 5 respectively. The second clip half 3 is formed with at both ends an integral radial outwardly extending flange 6 and 7 respectively. When fitted, the flange 4 of the first clip half 2 opposes the flange 6 of the second clip half 3, and the flange 5 of the first clip half 2 opposes the flange 7 of the second clip half 3.

The flanges 4 and 6 are connected by a screw 8, whereby a hinging connection is constituted such that the clip body can be opened to introduce a pipe (not shown) in the pipe clip 1. The flanges 5 and 7 thus define an opening 15 through which the pipe can be introduced. In line with the terminology in the claims, the following the flange 7 will be referred to as the first flange and the flange 5 will be referred to as the second flange.

The second flange 5 is provided with a slot 11, which opens up at a radial end edge 12 of the second flange 5.

In the first flange 7 a female fastening element 9 is formed by a cut 10 in the plate portion which forms the first flange 7. In the embodiment shown, the female fastening element 9 has a substantially square outer contour which is formed by a substantially square cut 10 through the flange 7. However the female fastening element can also have another outer suitable outer contour such as circular, polygonal etc. The female fastening element 9 has a (screw) hole formed in it, in which a shank of a screw 13 is screwed. The female fastening element 9 is connected to the first flange 7 or the arched portion of the first clip half 3 by a hinge portion 14. The hinge portion 14 has some resiliency to bias the female fastening element 9 to its original position, in which it lies in the plane of the flange 7.

In use, when the pipe clip is closed, the first flange and second flange are moved towards each other. At a certain moment the head of the screw 13 engages the second flange 5. The force on the head of the screw 13 causes the screw to swivel together with the associated female fastening element 9 (see Fig. 2), such that the head moves towards the outer edge 12 of the second flange 5. When the screw head moves beyond the edge 12, the shank of the screw 13 can move into the slot 11 in the second flange 5 and the female fastening element 9 can swivel back to its original position (see Fig. 3). The screws 8 and 13 can now be tightened in order to tighten the pipe clip around the pipe.

In an alternative embodiment of this pipe clip the pipe clip half 3 has a third flange formed on it. In Fig. 4 is shown the pipe clip half 3, wherein a third flange 16 is positioned above the first flange 7, that is, on the side of the first flange 7 that faces the second flange 5. The third flange 16 is formed by bending an extension 16' (cf. Fig. 5) of the first flange 7 over the first flange 7. The third flange 16 is provided with a slotted hole 17 for passing through the shank of the screw 13.

The alternative embodiment illustrated by Figs 4 and 5 functions the same as the pipe clip described with reference to Figs 1-3. The difference is that when the screw is tightened at the end of the mounting, the third flange can be clamped between the first flange 7 and second flange 5. This embodiment has the advantage that in the event that the hinge portion 14 would break, for example during tightening, the pipe clip remains closed and functional.

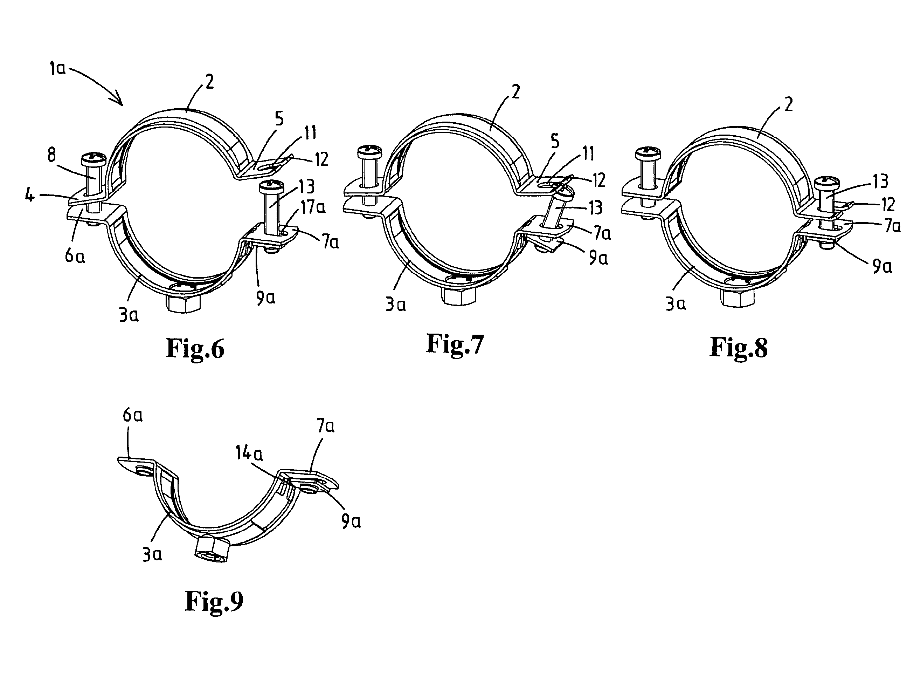

In Fig. 6 is a pipe clip 1A with another lower clip half 3A. The upper clip half 2 is the same as described above for the embodiment of Figs 1-3 and for its description is referred to the above. The lower clip half 3A has a female fastening element 9A, which is positioned below the first flange 7A. The female fastening element 9A is formed by cutting it out of the metal strip from which the arched portion of the clip half 3A is formed. The female fastening element 9A remains connected with the clip body by one hinge portion 14A, which is bent such that the female fastening element extends spaced apart from the first flange and parallel therewith in a rest position, as is clearly visible in Fig. 9. The hinge portion 14A has some resiliency to bias the female fastening element 9A to its original position, in which it lies in a plane substantially parallel to the first third flange 7A.The flange 7A is provided with a slotted hole 17A for passing through the shank of the screw 13.

In use, when the pipe clip 1A of Fig. 6 is closed, the first flange 7A and second flange 5 are moved towards each other. At a certain moment the head of the screw 13 engages the second flange 5. The force on the head of the screw 13 causes the screw to swivel together with the associated female fastening element 9A (see Fig. 7), such that the head moves towards the outer edge 12 of the second flange 5. When the screw head moves beyond the edge 12, the shank of the screw 13 can move into the slot 11 in the second flange 5 and the female fastening element 9A can swivel back to its original position (see Fig. 8). The screws 8 and 13 can now be tightened in order to tighten the pipe clip around the pipe.

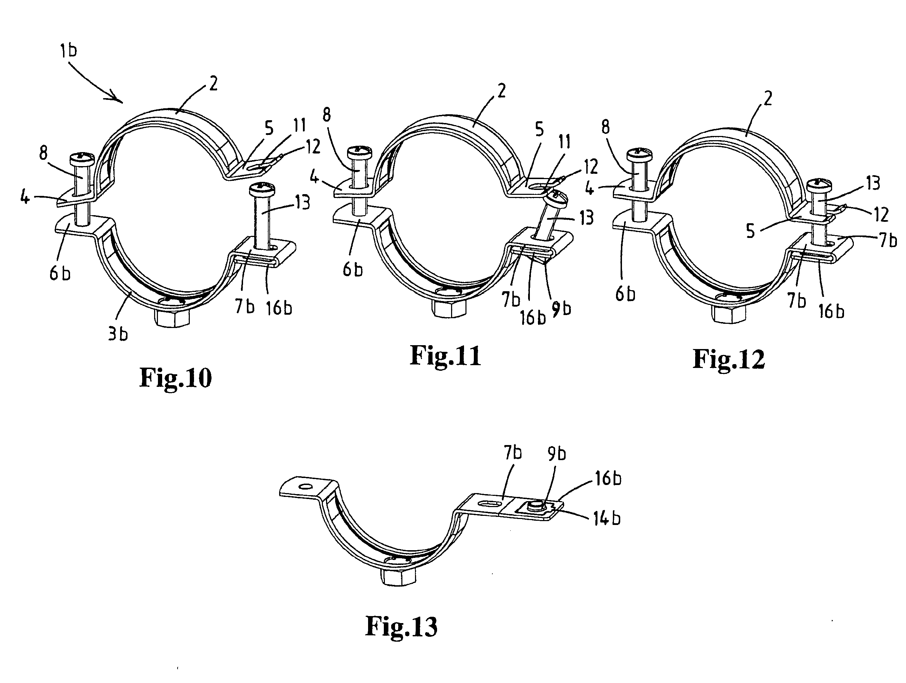

In Fig. 10 is shown a pipe clip 1 B with another lower clip half 3B. The upper clip half 2 is the same as described above for the embodiment of Figs 1-3 and for its description is referred to the above. The lower clip half 3B has a female fastening element 9B, which is positioned below the first flange 7B, that is on the side of the first flange that is facing away from the second flange 5. A third flange 16B is positioned below the first flange 7B, that is, on the side of the first flange 7B that faces away from the second flange 5. The third flange 16B is formed by folding an extension 16B' (cf. Fig. 5) of the first flange 7 below the first flange 7. The female fastening element 9B is formed by cutting it out of the metal strip16B' from which the third flange 16B is formed. The female fastening element 9B remains connected to the third flange 16B by a hinge portion 14B, which is located at the radial inner end of the female fastening element 9B. The hinge portion 14 has some resiliency to bias the female fastening element 9B to its original position, in which it lies in the plane of the third flange 16B. The first flange 7B is provided with a slotted hole 17B for passing through the shank of the screw 13.

In use, when the pipe clip 1 B of Fig. 10 is closed, the first flange 7B and second flange 5 are moved towards each other. At a certain moment the head of the screw 13 engages the second flange 5. The force on the head of the screw 13 causes the screw to swivel together with the associated female fastening element 9B (see Fig. 11), such that the head moves towards the outer edge 12 of the second flange 5. When the screw head moves beyond the edge 12, the shank of the screw 13 can move into the slot 11 in the second flange 5 and the female fastening element 9B can swivel back to its original position (see Fig. 12). The screws 8 and 13 can now be tightened in order to tighten the pipe clip around the pipe.

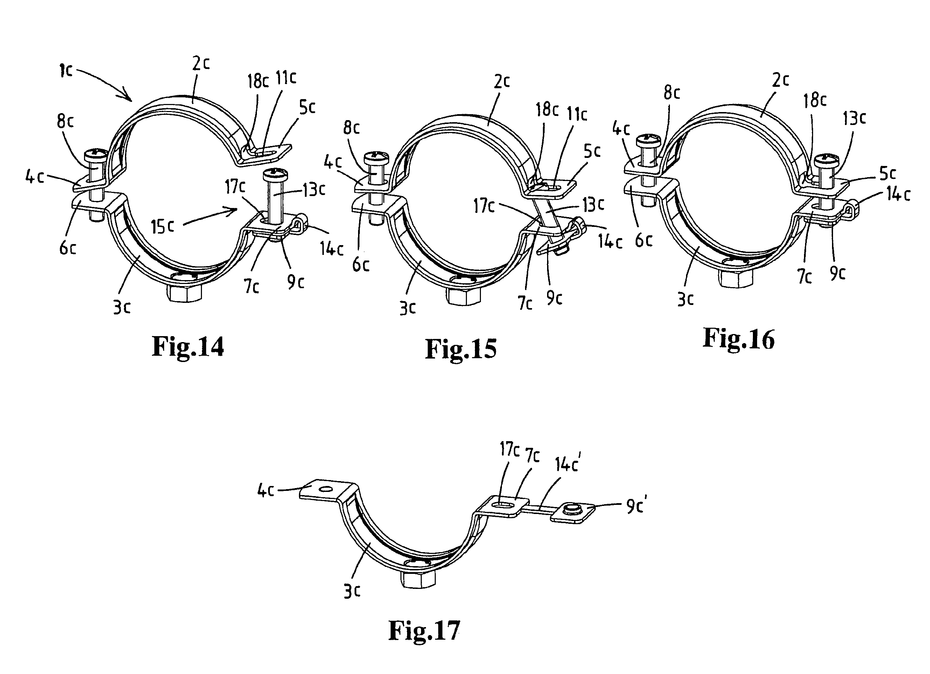

In Fig. 14 is shown another pipe clip 1C, having an annular pipe clip body. The pipe clip body comprises two pipe clip halves 2C and 3C respectively, which are formed out of metal. The first clip half 2C is provided at both ends with an integral radial outwardly extending flange 4C and 5C respectively. The second clip half 3C is formed with at both ends an integral radial outwardly extending flange 6C and 7C respectively. When fitted, the flange 4C of the first clip half 2C opposes the flange 6C of the second clip half 3C, and the flange 5C of the first clip half 2C opposes the flange 7C of the second clip half 3C.

The flanges 4C and 6C are connected by a screw 8C, whereby a hinging connection is constituted such that the clip body can be opened to introduce a pipe (not shown) in the pipe clip 1C. The flanges 5C and 7C thus define an opening 15C through which the pipe can be introduced. In line with the terminology in the claims, the following the flange 7C will be referred to as the first flange and the flange 5C will be referred to as the second flange.

The second flange 5C is provided with a slot 11C, which opens up at a radial inner end of the second flange 5C. In the arched portion of the upper clip half 2C an introduction opening 18C for the head of the male fastening element 13C is provided, which joins the slot 11C in the flange 5C.

The lower clip half 3C has a female fastening element 9C, which is positioned below the first flange 7C. The female fastening element 9C is connected to the first flange 7C by a hinge portion 14C. The hinge portion is in the specific embodiment shown formed on the radial outer end of the first flange 7C.The hinge portion is formed as a loop, which is resilient to bias the female fastening element 9C in the original position of Fig. 14 in which it lies in a plane substantially parallel to the first flange 7C. The female fastening element 9C is preferably formed as a nut with a screw hole. The female fastening element 9C is together with the hinge portion initially formed as an extension 14C', 9C' on the first flange 7C (see Fig. 17). The first flange 7C is provided with a slotted hole 17C for passing through the shank of the screw 13.

In use, when the pipe clip 1C of Fig. 14 is closed, the first flange 7C and second flange 5C are moved towards each other. At a certain moment the head of the screw 13C engages the second flange 5C. The force on the head of the screw 13C causes the screw to swivel together with the associated female fastening element 9C (see Fig. 15), such that the head moves towards the inner end of the second flange 5C. When the screw head moves beyond the edge of the introduction opening 18C, the shank of the screw 13C can move into the slot 11C in the second flange 5C and the female fastening element 9C can swivel back to its original position (see Fig. 16). The screws 8C and 13C can now be tightened in order to tighten the pipe clip around the pipe.

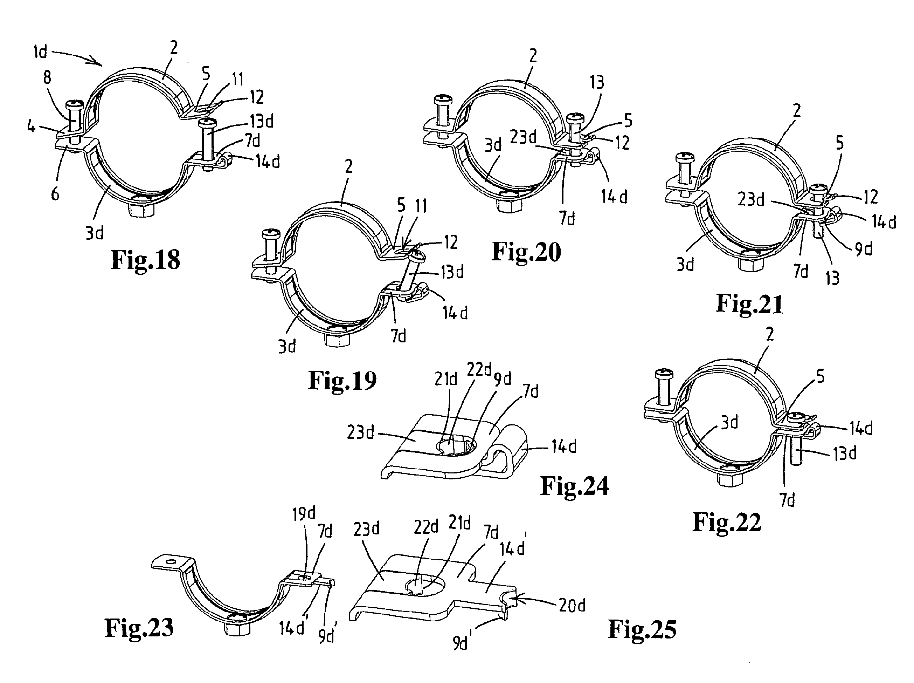

In Fig. 18 is a pipe clip 1 D with a lower clip half 3D. The upper clip half 2 is the same as described above for the embodiment of Figs 1-3 and for its description is referred to that part of the description. The lower clip half 3D has a first flange 7D which is provided with a hole 19D (cf. Fig. 23) for passing through the shank of the male fastening element 13D. The male fastening element 13D is preferably a screw. A hinged half nut 9D is provided, which has a screw thread section 20D. The half nut 9D is connected to the first flange 7D by a resilient hinge portion 14D. The half nut 9D is arranged such that, in use, one side of the shank of the male fastening element 13D is engaged by the screw thread section 20D of the half nut 9D. An opposite side of the shank is engaged by a shank engaging portion 21D which is formed as a half nut as well having a screw thread section 22D. The hinge portion 14D is in the specific embodiment shown formed on the radial outer end of the first flange 7D.The hinge portion 14D is formed as a loop, which is resilient to bias the half nut 9D in the original position of Fig. 14 in which it extends in the hole 19D in the first flange 7D and it is positioned opposite the screw thread section 22D of the shank engaging portion 21 D of the first flange 7D. The half nut 9D is together with the hinge portion 14D initially formed as an extension 14D', 9D' on the first flange 7D (see Figs 23 and 25). The shank engaging portion 21 D is hinged as well by means of a resilient hinge portion 23D that is formed from the same plate portion as the first flange 7D. The hinge portion 23D is formed by two cutting lines extending from the shank engaging portion 21 D towards the radial inner end of the flange 7D, which is best seen in Figs 24 and 25.

In use the screw 13D is held at its shank by the threaded sections 22D and 20D of the respective halve nuts 21 D and 9D. When the pipe clip 1 D of Fig. 18 is closed, the first flange 7D and second flange 5 are moved towards each other. At a certain moment the head of the screw 13D engages the second flange 5. The force on the head of the screw 13D causes the screw to swivel (see Fig. 19), such that the head moves towards the outer edge 12 of the second flange 5. In Fig. 19 can be seen that the swivelling movement of the screw 13D pushes the half nut 9D down and in a radial outward direction. The other half nut 21 D is pushed upwards. When the screw head moves beyond the edge 12, the shank of the screw 13D can move into the slot 11 in the second flange 5 and the half nuts 9D and 21D can swivel back to its original position (see Fig. 20). The flanges 5 and 7D can now be tightened together by pushing down the screw 13D. By pushing down the screw the half nuts are moved down and moved outwards so as to make room for the threaded shank to pass (see Fig. 21). When the flanges 5 and 7D are tightened together the half nuts 9D and 21D can swivel back to their original position (see Figs 22 and 24).

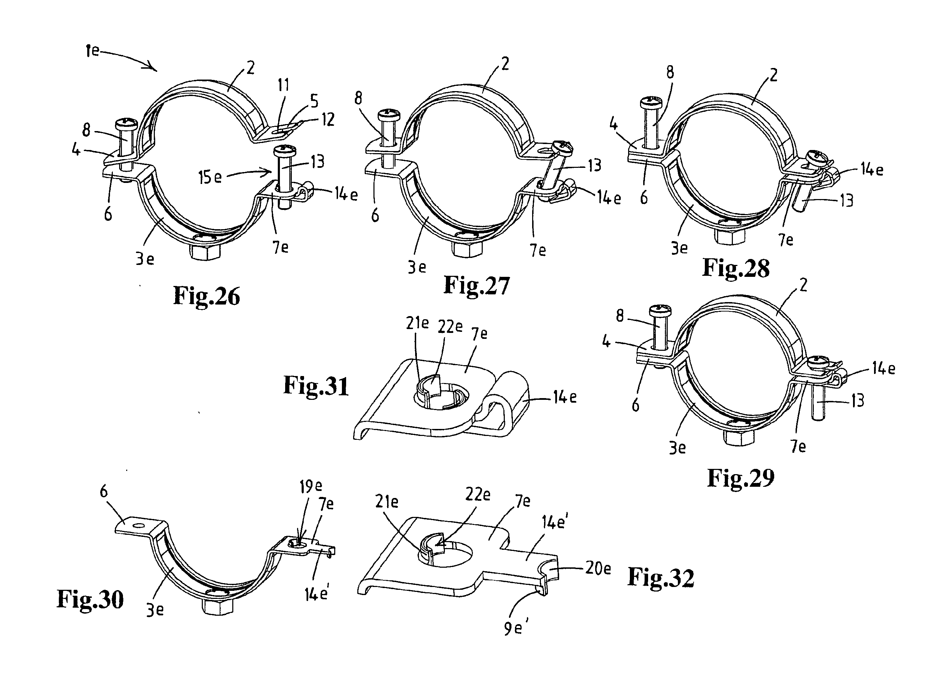

In Fig. 26 is shown a similar pipe clip 1E as in Fig. 18. The difference is that a shank engaging portion 21 E is formed as a half nut which is stationary with the first flange 7E. The half nut 21 E is arranged on the side of the first flange 7E that faces the second flange 5. For the rest of the features of the pipe clip 1 E is referred to the description of the previous embodiment of Fig. 18, wherein the "D" in the reference numerals has been changed into "E".

In use the screw 13E is held at its shank by the threaded sections 22E and 20E of the respective halve nuts 21E and 9E. When the pipe clip 1E of Fig. 26 is closed, the first flange 7E and second flange 5 are moved towards each other. At a certain moment the head of the screw 13E engages the second flange 5. The force on the head of the screw 13E causes the screw to swivel (see Fig. 27), such that the head moves towards the outer edge 12 of the second flange 5. In Fig. 27 can be seen that the swivelling movement of the screw 13E pushes the half nut 9E down and in a radial outward direction. The other half nut 21 E is stationary on the flange 7E. When the screw head moves beyond the edge 12, the shank of the screw 13E can move into the slot 11 in the second flange 5 (see Figs 27 and 28). The flanges 5 and 7E can now be tightened together by pushing down the screw 13E. The screw assumes slight tilted position when it is pushed down (see Fig. 28) This is due to the stationary nature and the position of the half nut 21 E on the first flange 7E. By pushing down the screw 13E the half nut 9E is moved down and moved outwards so as to make room for the threaded shank to pass (see Fig. 21). When the flanges 5 and 7E are tightened together the half nut 9E can swivel back to its original position (see Figs 29 and 31).

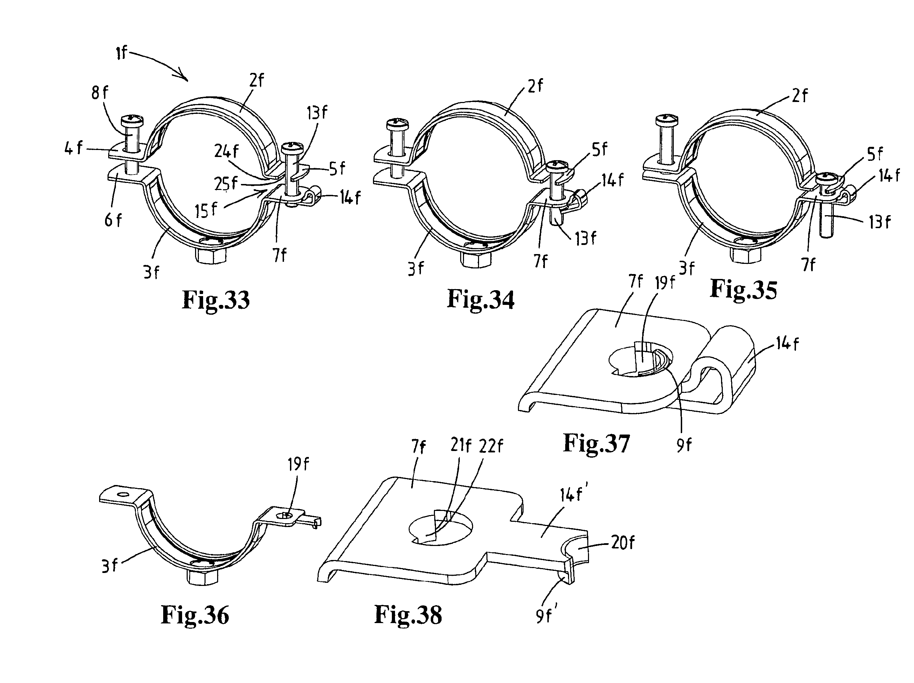

In Fig. 33 is shown a pipe clip 1 F having an annular pipe clip body. The pipe clip body comprises two pipe clip halves 2F and 3F respectively, which are formed out of metal. The first clip half 2F is provided at both ends with an integral radial outwardly extending flange 4F and 5F respectively. The second clip half 3F is formed with at both ends an integral radial outwardly extending flange 6F and 7F respectively. When fitted, the flange 4F of the first clip half 2F opposes the flange 6F of the second clip half 3F, and the flange 5F of the first clip half 2F opposes the flange 7F of the second clip half 3F.

The flanges 4F and 6F are connected by a screw 8F, whereby a hinging connection is constituted such that the clip body can be opened to introduce a pipe (not shown) in the pipe clip 1 F. The flanges 5F and 7F thus define an opening 15F through which the pipe can be introduced. In line with the terminology in the claims, the following the flange 7F will be referred to as the first flange and the flange 5F will be referred to as the second flange.

The second flange 5F is provided with a slot 25F, which opens up at a lateral edge 24F of the second flange 5.

The lower clip half 3F is provided at the first flange 7F with a hole 19F (cf. Figs 36 and 37) for passing through the shank of the male fastening element 13F. The male fastening element 13F is preferably a screw. A hinged half nut 9F is provided, which has a screw thread section 20F. The half nut 9F is connected to the first flange 7F by a resilient hinge portion 14F. The half nut 9F is arranged such that, in use, one side of the shank of the male fastening element 13F is engaged by the screw thread section 20F of the half nut 9F.

An opposite side of the shank is engaged by a shank engaging portion 21 F which is formed as a half nut as well having a screw thread section 22F.

The hinge portion 14F is in the specific embodiment shown formed on the radial outer end of the first flange 7F.The hinge portion 14F is formed as a loop, which is resilient to bias the half nut 9F in the original position of Figs 33 and 37, in which it extends in the hole 19F in the first flange 7F and it is positioned opposite the screw thread section 22F of the shank engaging portion 21 F of the first flange 7F. The half nut 9F is together with the hinge portion 14F initially formed as an extension 14F', 9F' on the first flange 7F (see Figs 36 and 38).

The shank engaging portion 21 F is formed as a half nut which is stationary with the first flange 7F. The half nut 21 F is arranged on the side of the first flange 7E that faces away from the second flange 5F.

The screw 13F is held at its shank by the threaded sections 22F and 20F of the respective halve nuts 21 F and 9F. In use, the pipe clip half 2F is rotated with respect to the other pipe clip half 3F around the screw 8F such that the screw 13F moves lateral with respect to the second flange 5F into the slot 25F. In Fig. 33 is shown a state in which the shank of the screw 13F is already received in the slot 25F. The flanges 5F and 7F can now be tightened together by pushing down the screw 13F. By pushing down the screw 13F the half nut 9F is moved down and moved outwards so as to make room for the threaded shank to pass (see Fig. 34). When the flanges 5F and 7F are tightened together far enough the half nut 9F can swivel back to its original position (see Figs 35 and 37).

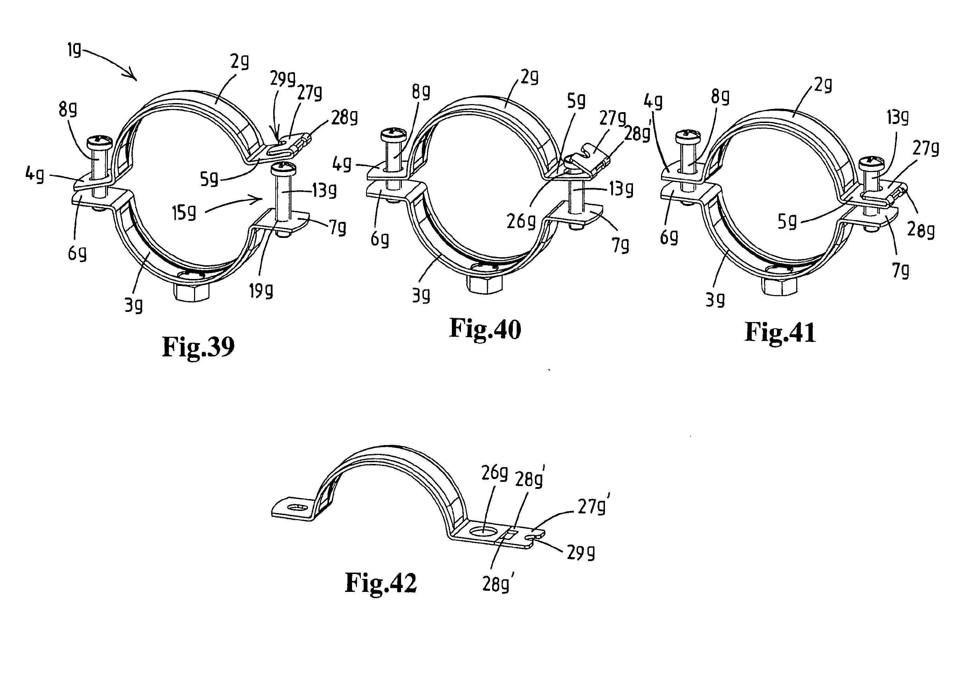

In Fig. 39 is shown a pipe clip 1G having an annular pipe clip body. The pipe clip body comprises two pipe clip halves 2G and 3G respectively, which are formed out of metal. The first clip half 2G is provided at both ends with an integral radial outwardly extending flange 4G and 5G respectively. The second clip half 3G is formed with at both ends an integral radial outwardly extending flange 6G and 7G respectively. When fitted, the flange 4G of the first clip half 2G opposes the flange 6G of the second clip half 3G, and the flange 5G of the first clip half 2G opposes the flange 7G of the second clip half 3G.

The flanges 4G and 6G are connected by a screw 8G, whereby a hinging connection is constituted such that the clip body can be opened to introduce a pipe (not shown) in the pipe clip 1G. The flanges 5G and 7G thus define an opening 15G through which the pipe can be introduced. In line with the terminology in the claims, the following the flange 7G will be referred to as the first flange and the flange 5G will be referred to as the second flange.

The male fastening element 13G is preferably a screw. The lower clip half 3G is provided at the first flange 7G with a screw hole 19G for cooperating with the shank of the screw 13G. The second flange 5G is provided with a hole 26G, which has such dimensions that the head of the screw 13G can pass through it.

An arresting plate 27G is arranged on the side of the second flange 5G that faces away from the first flange 7G. The arresting plate 27G is hingedly connected to the radial outer end of the second flange 5G by means of a resilient hinge portion 28G that is bent such that the arresting plate 27G extends on the side of the second flange 5G facing away from the first flange 7G. The arresting plate 27G and the hinge portion 28G are initially formed as an extension 28G', 27G' of the second flange 5G as can be seen in Fig. 42 which is then folded such that it extends over the upper side of the second flange 5G, as is shown in Fig. 39. The arresting plate 27G is provided with a recess 29G at its free end for receiving the shank of the screw 13G.

When this pipe clip 1G is closed around a pipe, the head of the screw 13G is moved through the hole 26G in the second flange 5G. When the head abuts the arresting plate 27G it will cause the arresting plate 27G to swivel upwardly until the head can pass the edge of the arresting plate 27G (see Fig. 40). When the head has passed said edge of the arresting plate 27G the arresting plate 27G will return to its initial position and the shank will be received in the recess 29G. The edge of the recess 29G will engage behind the head, thereby preventing the retraction of the head of the screw 13G through the opening 26G in the second flange 5G.

## Claims

1. Pipe clip (1; 1 A; 1 B; 1C; 1 D; 1 E; 1 F; 1 G) for fastening a pipe to a wall, ceiling or another support, comprising:
- a metal annular clip body with an opening (15) for attaching the pipe clip around the pipe, which opening is delimited by a first and a second end of the clip body, a first flange (7; 7A; 7B; 7C; 7D; 7E; 7F; 7G) and second flange (5) being monolithically formed with the clip body from the same piece of sheet metal at the first and second end and extending in a radial direction,
- a male fastening element (13) comprising a head and a shank, the shank being associated with the first end and the head engaging the second end of the clip body for tightening the first and second end of the clip body together in a mounted state,
**characterised in that** the pipe clip comprises, in addition to the first and second flange (7; 7A; 7B; 7C; 7D; 7E; 7F; 7G, 5), a hinged member (9; 9A; 9B; 9C; 9D; 9E; 9F; 9G) which is monolithically formed with the clip body from the same piece of sheet metal, said hinged member (9; 9A; 9B; 9C; 9D; 9E; 9F; 9G) engaging the male fastening element (13) in order to cooperate with its shank or head.

2. Pipe clip according to claim 1, wherein the hinged member is formed as a female fastening element cooperating with the shank of the male fastening element.

3. Pipe clip according to claim 2, wherein the female fastening element is formed by a cut in a plate portion forming the first flange and is connected with the first flange by means of a hinge portion, such that the flange circumscribes the female fastening element.

4. Pipe clip according to claim 2, wherein the female fastening element is formed by a plate portion cut out from the clip body and connected therewith by means of a hinge portion, which is bent such that the female fastening element extends spaced apart from the first flange and parallel therewith in a rest position.

5. Pipe clip according to claims 2-3, wherein a third flange is monolithically formed with the first flange and is connected therewith by a bend portion, such that said third flange extends spaced apart from and parallel to the first flange.

6. Pipe clip according to claims 3 and 5, wherein the third flange extends at the side of the first flange facing the second flange, and the third flange is provided with an elongate recess to allow the shank of the male fastening element to swivel.

7. Pipe clip according to claims 2 and 5, wherein the third flange extends at the side of the first flange facing away from the second flange, and wherein the female fastening element is formed by a cut in a plate portion forming the third flange and is connected with the third flange by means of a hinge portion, such that the flange circumscribes the female fastening element, wherein the first flange is provided with an elongate recess to allow the shank of the tightening element to swivel.

8. Pipe clip according to claim 3 or 7, wherein the hinge portion is arranged on the radial inner end of the female fastening element, or
the hinge portion is arranged on the radial outer end of the female fastening element.

9. Pipe clip according to claim 2, wherein the female fastening element is arranged on the side of the first flange facing away from the second flange, the first flange having a hole for passing through the shank of the male fastening element, wherein the female fastening element is connected to the first flange by a resilient hinge portion, wherein the first flange, the hinge portion and the female fastening element are monolithically formed, wherein the resilient hinge preferably is formed as a bent loop.

10. Pipe clip according to claims 2 - 9, wherein the female fastening element is formed as a nut with a screw hole having an internal thread.

11. Pipe clip according to claim 1, wherein the first flange is provided with a hole for passing through the shank of the male fastening element, and wherein the hinged member comprises a half nut with a screw thread section, wherein the half nut is connected to the first flange by a resilient hinge portion, the half nut being arranged such that in use one side of the shank of the male fastening element is engaged by the half nut and an opposite side of the shank is engaged by a shank engaging portion of the first flange, wherein the first flange, the hinge portion and the female fastening element are monolithically formed, wherein the resilient hinge preferably is formed as a bent loop.

12. Pipe clip according to claim 11, having one or more of the following features:
- the half nut is integrally connected to the flange via a resilient loop;
- the half nut is positioned at least partially in the hole in the first flange;
- the shank engaging portion of the first flange comprises a half nut, with a screw thread section,
wherein, the half nut of the first flange is formed such that in axial direction it at least partially extends from the first flange towards the second flange, or wherein, the half nut of the first flange is formed such that in axial direction it at least partially extends from the first flange away from the second flange.

13. Pipe clip according to claim 11, wherein the half nut is positioned at least partially in the hole in the first flange and the half nut of the first flange is formed such that in axial direction it at least partially extends from the first flange away from the second flange, and wherein the hinged half nut and the half nut formed on the flange are positioned opposite each other, wherein, preferably, the half nut formed on the flange is a hinged half nut as well, which is hingedly attached to the clip body, wherein said half nut and corresponding hinge are monolithically formed with the clip body.

14. Pipe clip according to claim 11, wherein the half nut is positioned at least partially in the hole in the first flange and the half nut of the first flange is formed such that in axial direction it at least partially extends from the first flange towards the second flange, and wherein the hinged half nut and the half nut formed on the first flange are positioned mutually staggered in axial direction of the shank of the male fastening element.

15. Pipe clip according to claim 1, wherein the second flange is provided with an opening for passing through the head of the male fastening element, and wherein the hinged member is formed as an arresting plate for the head of the male fastening element, said arresting plate being connected to the second flange by means of a resilient hinge portion that is bent such that the arresting plate extends on the side of the second flange facing away from the first flange, wherein the second flange, the arresting plate and the hinge portion are monolithically formed.

## Patentansprüche

1. Rohrschelle (1; 1A; 1B; 1C; 1D; 1E; 1F; 1G) zum Befestigen eines Rohrs an einer Wand, Decke oder anderen Unterlage, Folgendes aufweisend:
- einen ringförmigen Metallschellenkörper mit einer Öffnung (15) zum Anbringen der Rohrschelle um das Rohr, welche Öffnung durch ein erstes und ein zweites Ende des Schellenkörpers begrenzt ist, wobei ein erster Flansch (7; 7A; 7B; 7C; 7D; 7E; 7F; 7G) und ein zweiter Flansch (5) monolithisch mit dem Schellenkörper aus demselben Metallblechteil am ersten und zweiten Ende ausgebildet sind und sich in einer radialen Richtung erstrecken,
- ein eingreifendes Befestigungselement (13), das einen Kopf und einen Schaft aufweist, wobei der Schaft mit dem ersten Ende verbunden ist und der Kopf das zweite Ende des Schellenkörpers in Eingriff nimmt, um das erste und zweite Ende des Schellenkörpers in einem montierten Zustand fest aneinander zu ziehen,
**dadurch gekennzeichnet, dass** die Rohrschelle zusätzlich zum ersten und zweiten Flansch (7; 7A; 7B; 7C; 7D; 7E; 7F; 7G, 5) ein angelenktes Teil (9; 9A; 9B; 9C; 9D; 9E; 9F; 9G) aufweist, das monolithisch mit dem Schellenkörper aus demselben Metallblechteil ausgebildet ist, wobei das angelenkte Teil (9; 9A; 9B; 9C; 9D; 9E; 9F; 9G) das eingreifende Befestigungselement (13) in Eingriff nimmt, um mit dessen Schaft oder Kopf zusammenzuwirken.

2. Rohrschelle nach Anspruch 1, wobei das angelenkte Teil als ein aufnehmendes Befestigungselement ausgebildet ist, das mit dem Schaft des eingreifenden Befestigungselements zusammenwirkt.

3. Rohrschelle nach Anspruch 2, wobei das aufnehmende Befestigungselement durch einen Einschnitt in einem den ersten Flansch bildenden Plattenabschnitt ausgebildet und mit dem ersten Flansche mittels eines Anlenkungsabschnitts so verbunden ist, dass der Flansch um das aufnehmende Befestigungselement herum verläuft.

4. Rohrschelle nach Anspruch 2, wobei das aufnehmende Befestigungselement durch einen Plattenabschnitt gebildet ist, der aus dem Schellenkörper ausgeschnitten und damit mittels eines Anlenkungsabschnitts verbunden ist, der so gebogen ist, dass sich das aufnehmende Befestigungselement in einer Ruheposition vom ersten Flansch beabstandet und parallel zu diesem erstreckt.

5. Rohrschelle nach den Ansprüchen 2 - 3, wobei ein dritter Flansch monolithisch mit dem ersten Flansch und durch einen gebogenen Abschnitt damit so verbunden ist, dass sich der dritte Flansch vom ersten Flansch beabstandet und dazu parallel erstreckt.

6. Rohrschelle nach den Ansprüchen 3 und 5, wobei sich der dritte Flansch auf der dem zweiten Flansch zugewandten Seite des ersten Flanschs erstreckt, und wobei der dritte Flansch mit einer länglichen Ausnehmung versehen ist, um den Schaft des eingreifenden Befestigungselements sich verschwenken zu lassen.

7. Rohrschelle nach den Ansprüchen 2 und 5, wobei sich der dritte Flansch auf der vom zweiten Flansch abgewandten Seite des ersten Flanschs erstreckt, und wobei das aufnehmende Befestigungselement durch einen Einschnitt in einem den dritten Flansch bildenden Plattenabschnitt ausgebildet und mit dem dritten Flansch mittels eines Anlenkungsabschnitts so verbunden ist, dass der Flansch um das aufnehmende Befestigungselement herum verläuft, wobei der erste Flansch mit einer länglichen Ausnehmung versehen ist, um den Schaft des Befestigungselements sich verschwenken zu lassen.

8. Rohrschelle nach Anspruch 3 oder 7, wobei der Anlenkungsabschnitt am radialen inneren Ende des aufnehmenden Befestigungselements angeordnet ist, oder der Anlenkungsabschnitt am radial äußeren Ende des aufnehmenden Befestigungselements angeordnet ist.

9. Rohrschelle nach Anspruch 2, wobei das aufnehmende Befestigungselement auf der vom zweiten Flansch abgewandten Seite des ersten Flanschs angeordnet ist, wobei der erste Flansch eine Öffnung zum Durchtritt des Schafts des eingreifenden Befestigungselements hat, wobei das aufnehmende Befestigungselement durch einen federelastischen Anlenkungsabschnitt mit dem ersten Flansch verbunden ist, wobei der erste Flansch, der Anlenkungsabschnitt und das aufnehmende Befestigungselement monolithisch ausgebildet sind, wobei die federelastische Anlenkung vorzugsweise als eine gebogene Schlaufe ausgebildet ist.

10. Rohrschelle nach den Ansprüchen 2 - 9, wobei das aufnehmende Befestigungselement als eine Mutter mit einer Schraubenöffnung ausgebildet ist, die ein Innengewinde hat.

11. Rohrschelle nach Anspruch 1, wobei der erste Flansch mit einer Öffnung zum Durchtritt des Schafts des eingreifenden Befestigungselements versehen ist, und wobei das angelenkte Teil eine Halbmutter mit einem Schraubengewindeabschnitt aufweist, wobei die Halbmutter durch einen federelastischen Anlenkungsabschnitt mit dem ersten Flansch verbunden ist, wobei die Halbmutter so angeordnet ist, dass im Gebrauch eine Seite des Schafts des eingreifenden Befestigungselements durch die Halbmutter in Eingriff genommen ist, und eine entgegengesetzte Seite des Schafts durch einen Schafteingriffsabschnitt des ersten Flanschs in Eingriff genommen ist, wobei der erste Flansch, der Anlenkungsabschnitt und das aufnehmende Befestigungselement monolithisch ausgebildet sind, wobei die federelastische Anlenkung vorzugsweise als eine gebogene Schlaufe ausgebildet ist.

12. Rohrschelle nach Anspruch 11, die eines oder mehrere der folgenden Merkmale hat:
- die Halbmutter ist über eine federelastische Schlaufe einstückig mit dem Flansch verbunden;
- die Halbmutter ist zumindest teilweise in der Öffnung im ersten Flansch positioniert;
- der Schafteingriffsabschnitt des ersten Flanschs weist eine Halbmutter mit einem Schraubengewindeabschnitt auf,
wobei die Halbmutter des ersten Flanschs so ausgebildet ist, dass sie sich in einer axialen Richtung zumindest teilweise vom ersten Flansch zum zweiten Flansch erstreckt, oder
wobei die Halbmutter des ersten Flanschs so ausgebildet ist, dass sie sich in der axialen Richtung zumindest teilweise vom ersten Flansch weg vom zweiten Flansch erstreckt.

13. Rohrschelle nach Anspruch 11, wobei die Halbmutter zumindest teilweise in der Öffnung im ersten Flansch positioniert ist, und die Halbmutter des ersten Flanschs so ausgebildet ist, dass sie sich in der axialen Richtung zumindest teilweise vom ersten Flansch weg vom zweiten Flansch erstreckt, und wobei die angelenkte Halbmutter und die am Flansch ausgebildete Halbmutter einander entgegengesetzt positioniert sind, wobei vorzugsweise die am Flansch ausgebildete Halbmutter auch eine angelenkte Halbmutter ist, die angelenkt am Schellenkörper angebracht ist, wobei die Halbmutter und die entsprechende Anlenkung monolithisch mit dem Schellenkörper ausgebildet sind.

14. Rohrschelle nach Anspruch 11, wobei die Halbmutter zumindest teilweise in der Öffnung im ersten Flansch positioniert ist, und die Halbmutter des ersten Flanschs so ausgebildet ist, dass sie sich in der axialen Richtung zumindest teilweise vom ersten Flansch zum zweiten Flansch erstreckt, und wobei die angelenkte Halbmutter und die am ersten Flansch ausgebildete Halbmutter in der axialen Richtung des Schafts des eingreifenden Befestigungselements zueinander versetzt sind.

15. Rohrschelle nach Anspruch 1, wobei der zweite Flansch mit einer Öffnung zum Durchtritt des Kopfs des eingreifenden Befestigungselements versehen ist, und wobei das angelenkte Teil als eine Arretierplatte für den Kopf des eingreifenden Befestigungselements ausgebildet ist, wobei die Arretierplatte mit dem zweiten Flansch mittels eines federelastischen Anlenkungsabschnitts verbunden ist, der so gebogen ist, dass sich die Arretierplatte auf der vom ersten Flansch abgewandten Seite des zweiten Flanschs erstreckt, wobei der zweite Flansch, die Arretierplatte und der Anlenkungsabschnitt monolithisch ausgebildet sind.

## Revendications

1. Collier de fixation (1 ; 1A ; 1B ; 1C ; 1D ; 1E ; 1F ; 1G) pour lier un tuyau à un mur, un plafond ou un autre support, comprenant :
- un corps de collier annulaire métallique doté d'une ouverture (15) pour lier le collier de fixation autour du tuyau, laquelle ouverture est délimitée par une première et une seconde extrémité du corps de collier, une première bride (7 ; 7A ; 7B ; 7C ; 7D ; 7E ; 7F ; 7G) et une deuxième bride (5) étant formées de façon monolithique avec le corps de collier à partir de la même pièce de métal en feuille au niveau de la première et la seconde extrémité et s'étendant dans une direction radiale,
- un élément de liaison mâle (13) comprenant une tête et une tige, la tige étant associée à la première extrémité et la tête se mettant en prise avec la seconde extrémité du corps de collier pour serrer les première et seconde extrémités du corps de collier ensemble dans un état monté,
**caractérisé en ce que** le collier de fixation comprend, en plus de la première et la deuxième bride (7 ; 7A ; 7B ; 7C ; 7D ; 7E ; 7F ; 7G, 5), un organe articulé (9 ; 9A ; 9B ; 9C ; 9D ; 9E ; 9F ; 9G) qui est formé de façon monolithique avec le corps de collier à partir de la même pièce de métal en feuille, ledit organe articulé (9 ; 9A ; 9B ; 9C ; 9D ; 9E ; 9F ; 9G) se mettant en prise avec l'élément de liaison mâle (13) afin de coopérer avec sa tige ou sa tête.

2. Collier de fixation selon la revendication 1, dans lequel l'organe articulé est formé comme un élément de liaison femelle coopérant avec la tige de l'élément de liaison mâle.

3. Collier de fixation selon la revendication 2, dans lequel l'élément de liaison femelle est formé par une découpe sur une portion de plaque formant la première bride et est raccordé à la première bride au moyen d'une portion d'articulation, de sorte que la bride ceigne l'élément de liaison femelle.

4. Collier de fixation selon la revendication 2, dans lequel l'élément de liaison femelle est formé par une portion de plaque découpée du corps de collier et raccordé à celui-ci au moyen d'une portion d'articulation, qui est courbée de sorte que l'élément de liaison femelle s'étende espacé de la première bride et parallèle à celle-ci dans une position de repos.

5. Collier de fixation selon les revendications 2 et 3, dans lequel une troisième bride est formée de façon monolithique avec la première bride et est raccordée avec celle-ci par une portion courbée, de sorte que ladite troisième bride s'étende espacée de la première bride et parallèle à celle-ci.

6. Collier de fixation selon les revendications 3 et 5, dans lequel la troisième bride s'étend au niveau du côté de la première bride en regard de la deuxième bride et la troisième bride est dotée d'un évidement allongé pour permettre à la tige de l'élément de liaison mâle de pivoter.

7. Collier de fixation selon les revendications 2 et 5, dans lequel la troisième bride s'étend au niveau du côté de la première bride orientée en éloignement de la deuxième bride, et dans lequel l'élément de liaison femelle est formé par une découpe dans une partie de plaque formant la troisième bride et est raccordé à la troisième bride au moyen d'une portion d'articulation, de sorte que la bride ceigne l'élément de liaison femelle, dans lequel la première bride est dotée d'un évidement allongé pour permettre à la tige de l'élément de serrage de pivoter.

8. Collier de fixation selon la revendication 3 ou 7, dans lequel la portion d'articulation est agencée sur l'extrémité interne radiale de l'élément de liaison femelle, ou
la portion d'articulation est agencée sur l'extrémité externe radiale de l'élément de liaison femelle.

9. Collier de fixation selon la revendication 2, dans lequel l'élément de liaison femelle est agencé sur le côté de la première bride orientée en éloignement de la deuxième bride, la première bride ayant un trou pour le passage de la tige de l'élément de liaison mâle, dans lequel l'élément de liaison femelle est raccordé à la première bride par une portion d'articulation élastique, dans lequel la première bride, la portion d'articulation et l'élément de liaison femelle sont formés de façon monolithique, dans lequel l'articulation élastique est de préférence formée comme une boucle courbée.

10. Collier de fixation selon les revendications 2 à 9, dans lequel l'élément de liaison femelle est formé comme un écrou doté d'un trou de vis ayant un filetage interne.

11. Collier de fixation selon la revendication 1, dans lequel la première bride est dotée d'un trou pour traverser la tige de l'élément de liaison mâle, et dans lequel l'organe articulé comprend un demi-écrou doté d'une section de filetage de vis, dans lequel le demi-écrou est raccordé à la première bride par une portion d'articulation élastique, le demi-écrou étant agencé de sorte que, en utilisation, un côté de la tige de l'élément de liaison mâle soit mis en prise par le demi-écrou et un côté opposé de la tige soit mis en prise par une portion de mise en prise de tige de la première bride, dans lequel la première bride, la portion d'articulation et l'élément de liaison femelle sont formés de façon monolithique, dans lequel l'articulation élastique est de préférence formée comme une boucle courbée.

12. Collier de fixation selon la revendication 11, ayant une ou plusieurs des particularités suivantes :
- le demi-écrou est raccordé solidairement à la bride via une boucle élastique ;
- le demi-écrou est positionné au moins partiellement dans le trou dans la première bride ;
- la portion de mise en prise de tige de la première bride comprend un demi-écrou, avec une section de filetage de vis,
dans lequel le demi-écrou de la première bride est formé de sorte que, dans la direction axiale, il s'étende au moins partiellement à partir de la première bride vers la deuxième bride, ou
dans lequel le demi-écrou de la première bride est formé de sorte que, dans la direction axiale, il s'étende au moins partiellement à partir de la première bride en éloignement de la deuxième bride.

13. Collier de fixation selon la revendication 11, dans lequel le demi-écrou est positionné au moins partiellement dans le trou dans la première bride et le demi-écrou de la première bride est formé de sorte que, dans la direction axiale, il s'étende au moins partiellement à partir de la première bride en éloignement de la deuxième bride, et dans lequel le demi-écrou articulé et le demi-écrou formé sur la bride sont positionnés l'un en face de l'autre, dans lequel, de préférence, le demi-écrou formé sur la bride est également un demi-écrou articulé, qui est lié de façon articulée au corps de collier, dans lequel ledit demi-écrou et l'articulation correspondante sont formés de façon monolithique avec le corps de collier.

14. Collier de fixation selon la revendication 11, dans lequel le demi-écrou est positionné au moins partiellement dans le trou dans la première bride et le demi-écrou de la première bride est formé de sorte que, dans la direction axiale, il s'étende au moins partiellement à partir de la première bride vers la deuxième bride, et dans lequel le demi-écrou articulé et le demi-écrou formé sur la première bride sont positionnés mutuellement décalés dans la direction axiale de la tige de l'élément de liaison mâle.

15. Collier de fixation selon la revendication 1, dans lequel la deuxième bride est dotée d'une ouverture pour le passage de la tête de l'élément de liaison mâle, et dans lequel l'organe articulé est formé comme une plaque d'arrêt pour la tête de l'élément de liaison mâle, ladite plaque d'arrêt étant raccordée à la deuxième bride au moyen d'une portion d'articulation élastique qui est courbée de sorte que la plaque d'arrêt s'étende sur le côté de la deuxième bride orientée en éloignement de la première bride, dans lequel la deuxième bride, la plaque d'arrêt et la portion d'articulation sont formées de façon monolithique.
